# EUROPÄISCHE PATENTSCHRIFT

(11) **EP 0 891 273 B1**
(45) Veröffentlichungstag und Bekanntmachung des Hinweises auf die Patenterteilung: **27.10.1999**
(21) Anmeldenummer: 97917268.1
(22) Anmeldetag: 21.03.1997
(51) Int. Cl.: B60S 1/38, B60S 1/08

(54) **VORRICHTUNG ZUR ERMITTLUNG DES ZUSTANDES EINES WISCHERBLATTES**
DEVICE FOR DETERMINING THE STATE OF A WIPER BLADE
DISPOSITIF POUR DETERMINER L'ETAT D'UN BALAI D'ESSUIE-GLACE

(30) Priorität: 10.04.1996 DE 19614100
(43) Veröffentlichungstag der Anmeldung: 20.01.1999
(73) Patentinhaber: ROBERT BOSCH GMBH, 70442 Stuttgart (DE)
(72) Erfinder: MEIER, Hans, D-77833 Ottersweier (DE); RIEHL, Günther, D-77830 Bühlertal (DE); BLITZKE, Henry, D-77815 Bühl (DE)
(86) Internationale Anmeldenummer: DE9700584
(87) Internationale Veröffentlichungsnummer: WO9737877

(56) Entgegenhaltungen:
- DE-A- 3 639 831
- US-A- 5 140 233

## Beschreibung

### Stand der Technik

Die Erfindung betrifft eine Vorrichtung zur Ermittlung des Zustandes mindestens eines Wischerblattes eines Kraftfahrzeuges.

Aus Sicherheitsgründen müssen Wischerblätter von Kraftfahrzeugen regelmäßig gereinigt oder erneuert werden. Verschmutzte Wischerblätter führen zu einem unzureichenden Wischergebnis, so daß die Sicht beeinträchtigt wird. Gleiches gilt für abgenutzte oder überalterte Wischergummis. Unterschiedliche Einflußgrößen wirken sich auf das Wischergebnis aus und begrenzen die Lebensdauer von Wischerblättern, wobei es Somit für den Fahrer des Kraftfahrzeuges sehr schwierig ist, den Wischerblatt-Tauschzeitpunkt hinreichend genau zu bestimmen.

Aus der DE-OS 36 39 831 ist eine Vorrichtung bekannt, mit der der Zustand eines Wischerblattes ermittelt wird. Hierbei wird der Verschleiß einer Wischleiste mit einem optischen Feuchtefühler überwacht, mit dem die zu reinigende Scheibe vor und nach einem Wischvorgang abgetastet wird. Damit wird die Güte des Wischfeldes objektiv beurteilt und eine Aussage über den Verschleiß der Wischleiste erhalten. Dieser Feuchtefühler ist in einem vorzugsweise schreibgerätähnlichen Abtastgerät untergebracht, mit dem die zu reinigende Scheibe in den einzelnen Bereichen abgetastet wird. Dieser entspricht somit einem mobilen Prüfgerät und dient lediglich der Erfassung des Zustandes eines Wischblattes.

### Vorteile der Erfindung

Die erfindungsgemäße Vorrichtung zur Ermittlung des Zustandes mindestens eines Wischerblattes eines Kraftfahrzeuges sieht für die Bestimmung des Wischerblatt-Austauschzeitpunkts beziehungsweise eine Reinigung des Wischerblattes vor, einen bereits vorhandenen Regensensor zu nutzen. Mithin wird ein Bauteil, nämlich der Regensensor, nicht nur bestimmungsgemäß zur Erfassung eines Regenereignisses und damit zur Steuerung der Intervallschaltung der Scheibenwischer verwendet, sondern erfindungsgemäß zur Zustandsermittlung der Wischerblätter verwendet. Mithin kommt dem Regensensor erfindungsgemäß eine Doppelfunktion zu. Der Regensensor befindet sich beispielsweise im Bereich des Rückspiegels an der Windschutzscheibe und erfaßt dort den Zustand der Scheibenoberfläche hinsichtlich eines Niederschlags. Erfindungsgemäß ist er gleichzeitig in der Lage, den Zustand der Scheibe hinsichtlich etwaiger Verschmutzungen, Ablagerungen und so weiter zu detektieren, wodurch ein Rückschluß auf den Zustand des Wischerblattes, nämlich auf dessen Verschmutzung oder Abnutzung beziehungsweise Alterung der Wischerblätter beziehungsweise der Wischergummis möglich ist.

Wie bereits erwähnt, ist der Regensensor vorzugsweise an der das Wischerblatt aufweisenden Fahrzeugscheibe angeordnet.

Nach einer Weiterbildung der Erfindung ist vorgesehen, daß der Regensensor innerhalb des vom Wischerblatt überstrichenen Bereichs der Fahrzeugscheibe angeordnet ist. Dies stellt sicher, daß der Regensensor das Wischergebnis des Wischerblattes direkt erfassen kann.

Vorteilhaft ist es, wenn die Vorrichtung eine Auswerteschaltung aufweist, die die Daten des Regensensors auswertet. Diese Auswerteschaltung dient dazu, die vom Regensensor stammenden Daten hinsichtlich des Wischerblattzustandes auszuwerten und eine entsprechende Reaktion auszulösen, wenn bestimmte Grenzwerte überschritten werden. Die Auswerteschaltung nimmt vorzugsweise eine statistische Auswertung der vom Regensensor gelieferten Daten vor.

Insbesondere erfolgt die Auswertung der Auswerteschaltung in Hinblick auf eine Verschmutzung des Wischerblattes und/oder eine Verschmutzung des Regensensors und/oder eine Abnutzung des Wischergummis beziehungsweise Überalterung des Wischergummis. Hierzu wird ermittelt, ob sich die erfaßten Daten langsam und stetig verändern, was auf eine Abnutzung des Wischergummis hinweist. Erfolgt eine relativ schnelle, kontinuierliche Veränderung der Daten, so liegt eine Verschmutzung des Wischerblattes vor. Werden bestimmte Daten ermittelt, die nicht einem einwandfreien Zustand der Anlage entsprechen, so läßt dies auf eine Verschmutzung des Regensensors schließen, wobei in den meisten Fällen diese ermittelte Verschmutzung konstant ist, also kaum einer Änderung unterliegt. Durch entsprechende Auswertung, insbesondere im statistischen Sinne, können die einzelnen Zustandssituationen des Wischerblattes mit hinreichender Genauigkeit ermittelt werden.

Vorzugsweise wird ein Signal abgegeben, wenn ein bestimmter charakteristischer Zustand des Wischergummis detektiert wurde. Das Signal kann beispielsweise optisch und/oder akustisch erfolgen, insbesondere ist es vorteilhaft, eine Anzeige vorzusehen, die durch unterschiedliche Ansteuerung, zum Beispiel Blinken oder Dauerlicht, den Fahrer auffordert, das Wischerblatt zu wechseln oder den Regensensor und/oder den Wischergummi zu reinigen.

### Zeichnung

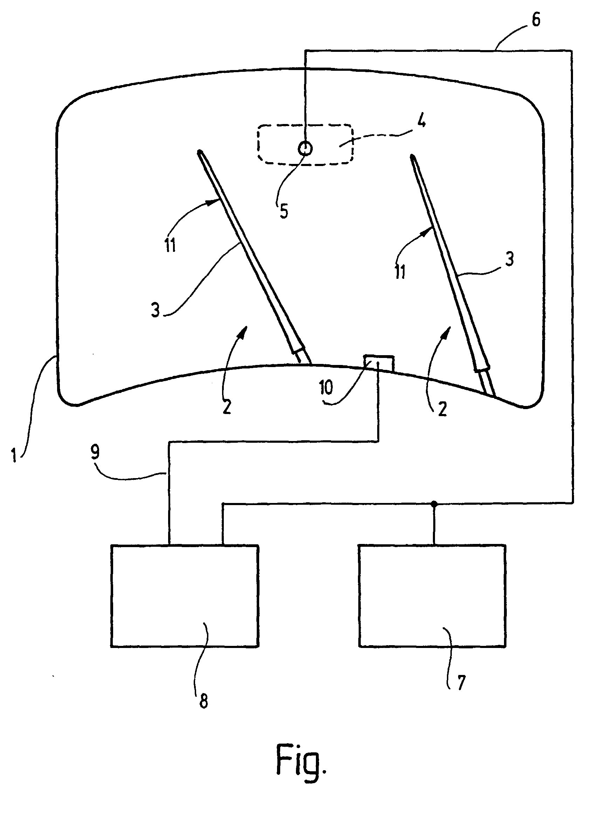

Die Erfindung wird im folgenden anhand der Figur näher erläutert. Sie zeigt -in schematischer Darstellung- eine Fahrzeugscheibe mit zwei Scheibenwischern sowie einem Regensensor und zugehöriger Elektronik.

Die Figur zeigt eine Fahrzeugscheibe 1, die eine Frontscheibe eines Kraftfahrzeuges bildet und der zwei Scheibenwischer 2 zugeordnet sind, die Wischerblätter 3 sowie an diesen angeordneten Wischergummis 11 aufweisen; möglich ist auch die Anordnung eines Scheibenwischers 2. Im Bereich des gestrichelt angedeuteten Rückspiegels 4 ist ein Regensensor 5 angeordnet, der über eine elektrische Leitung 6 mit einer zntervallelektronik 7 verbunden ist. Es ist jedoch auch möglich, den Regensensor 5 an einer anderen Stelle der Frontscheibe anzuordnen, wichtig ist nur, daß er in einem Bereich angeordnet ist, der von dem Scheibenwischer beziehungsweise den Scheibenwischern überstrichen wird. Diese Intervallelektronik 7 befindet sich beispielsweise im Motorraum. Sie stellt die übliche Einrichtung eines mit Regensensor 5 ausgestatteten Fahrzeugs dar, das heißt, detektiert der Regensensor 5 einen Niederschlag, so steuert die Intervallelektronik 7 die Scheibenwischer 2 im Rhythmus der Stärke des Niederschlagereignisses an.

Erfindungsgemäß ist der Regensensor 5 über die Leitung 6 an eine weitere Elektronik, nämlich eine Auswerteschaltung 8 angeschlossen, wobei die vom Regensensor 5 stammenden Daten von der Auswerteschaltung im Hinblick auf eine Erkennung des Zustandes der Wischerblätter 3 und/oder des Regensensors 5 ausgewertet werden. Hierzu weist die Auswerteschaltung 8 entsprechende Datenfelder, Kennlinienfelder oder dergleichen auf, so daß die vom Regensensor 5 stammenden Daten vorzugsweise unter statistischen Randbedingungen ausgewertet werden. Auf diese Art und Weise wird der an und für sich für einen anderen Zweck vorgesehene Regensensor dazu genutzt, den Abnutzungszustand oder Verschmutzungszustand des beziehungsweise der Wischergummis 11 zu erkennen und gleichzeitig überwacht er sich selbst, das heißt, seine eigene Verschmutzung wird ebenfalls von der Auswerteschaltung 8 detektiert. Die Auswerteschaltung 8 ist über eine Leitung 9 mit einer Anzeige 10 verbunden, die dem Fahrer des Fahrzeugs beispielsweise durch Blinken oder durch ein Dauerlicht mitteilt, daß ein bestimmter Zustand des Wischerblattes vorliegt oder eine Verschmutzung des Regensensors besteht, so daß der Fahrer die geeignete Maßnahme zum richtigen Zeitpunkt durchführen kann.

Insgesamt sorgt die Erfindung dafür, daß stets eine optimal reinigende Wischanlage des Kraftfahrzeuges vorliegt.

## Patentansprüche

1. Vorrichtung zur Ermittlung des Zustandes mindestens eines Wischerblatts eines Scheibenwischers eines Kraftfahrzeugs, dadurch gekennzeichnet, daß die Vorrichtung einen zur Steuerung des Scheibenwischers verwendeten Regensensor (5) zusätzlich zur Zustandsermittlung des Wischblatts verwendet.

2. Vorrichtung nach Anspruch 1, **dadurch gekennzeichnet**, daß der Regensensor (5) an der das Wischerblatt (3) aufweisenden Fahrzeugscheibe (1) angeordnet ist.

3. Vorrichtung nach einem der vorhergehenden Ansprüche, **dadurch gekennzeichnet**, daß der Regensensor (5) innerhalb des vom Wischerblatt (3) überstrichenen Bereichs der Fahrzeugscheibe (1) angeordnet ist.

4. Vorrichtung nach einem der vorhergehenden Ansprüche, **dadurch gekennzeichnet**, daß sie eine Auswerteschaltung (8) aufweist, die die Daten des Regensensors (5) auswertet.

5. Vorrichtung nach einem der vorhergehenden Ansprüche, **dadurch gekennzeichnet**, daß die Auswerteschaltung (8) eine statistische Auswertung der Daten durchführt.

6. Vorrichtung nach einem der vorhergehenden Ansprüche, **dadurch gekennzeichnet**, daß die Auswertung im Hinblick auf eine Verschmutzung des Wischerblattes (3) und/oder eine Verschmutzung des Regensensors (5) und/oder eine Abnutzung und/oder Überalterung des Wischergummis (11) erfolgt.

7. Vorrichtung nach einem der vorhergehenden Ansprüche, **dadurch gekennzeichnet**, daß bei der Auswertung zur Ermittlung der Abnutzung des Wischergummis (11) sich langsam und stetig verändernde Daten des Regensensors beziehungsweise sich schneller und stetig verändernde Daten des Regensensors herangezogen werden.

8. Vorrichtung nach einem der vorhergehenden Ansprüche, **dadurch gekennzeichnet**, daß ein den Zustand charakterisierendes Signal abgegeben wird.

## Claims

1. Device for determining the state of at least one wiper blade of a motor vehicle windscreen wiper, characterized in that the device uses a rain sensor (5), which is used for controlling the windscreen wiper, additionally for determining the state of the wiper blade.

2. Device according to Claim 1, characterized in that the rain sensor (5) is arranged on the vehicle window (1) which has the wiper blade (3).

3. Device according to one of the preceding claims, characterized in that the rain sensor (5) is arranged within that region of the vehicle window (1) which is wiped by the wiper blade (3).

4. Device according to one of the preceding claims, characterized in that it has an evaluation circuit (8) which evaluates the data of the rain sensor (5).

5. Device according to one of the preceding claims, characterized in that the evaluation circuit (8) carries out a statistical evaluation of the data.

6. Device according to one of the preceding claims, characterized in that the evaluation takes place in view of the wiper blade (3) becoming dirty and/or the rain sensor (5) becoming dirty and/or the wiper rubber (11) becoming worn and/or aged.

7. Device according to one of the preceding claims, characterized in that in the evaluation for determining the wear of the wiper rubber (11) use is made of slowly and constantly changing data of the rain sensor or of more rapidly and constantly changing data of the rain sensor.

8. Device according to one of the preceding claims, characterized in that a signal which characterizes the state is emitted.

## Revendications

1. Dispositif pour déterminer l'état d'au moins un balai d'essuie-glace d'un véhicule,
caractérisé en ce que
le dispositif utilise le capteur de pluie (5) servant à commander l'essuie-glace, pour déterminer en plus l'état de la lame du balai d'essuie-glace.

2. Dispositif selon la revendication 1,
caractérisé en ce que
le capteur de pluie (5) est installé sur une vitre de véhicule (1) équipée de l'essuie-glace (3).

3. Dispositif selon l'une quelconque des revendications précédentes,
caractérisé en ce que
le capteur de pluie (5) est installé dans une zone intérieure de la vitre (1) du véhicule (pare-brise) balayée par le balai d'essuie-glace (3).

4. Dispositif selon l'une quelconque des revendications précédentes,
caractérisé en ce qu'
il comporte un circuit d'exploitation (8) qui exploite les données du capteur de pluie (5).

5. Dispositif selon l'une quelconque des revendications précédentes,
caractérisé en ce que
le circuit d'exploitation (8) assure une exploitation statistique des données.

6. Dispositif selon l'une quelconque des revendications précédentes,
caractérisé en ce que
l'exploitation se fait du point de vue de l'encrassage de la lame du balai d'essuie-glace (3) et/ou de l'encrassage du capteur de pluie (5) et/ou de l'usure et/ou du vieillissement du caoutchouc de la lame (11) du balai d'essuieglace.

7. Dispositif selon l'une quelconque des revendications précédentes,
caractérisé en ce que
dans l'exploitation servant à déterminer l'usure du caoutchouc de la lame (11) du balai d'essuie-glace, on utilise des données variant lentement et en continu, fournies par le capteur de pluie, ou des données variant rapidement et en continu, du capteur de pluie.

8. Dispositif selon l'une quelconque des revendications précédentes,
caractérisé par
un signal caractérisant l'état.
